# EUROPÄISCHE PATENTSCHRIFT

(11) **EP 1 382 097 B1**
(45) Veröffentlichungstag und Bekanntmachung des Hinweises auf die Patenterteilung: **19.03.2014**
(21) Anmeldenummer: 02729836.3
(22) Anmeldetag: 26.03.2002
(51) Int. Cl.: H02B 11/127

(54) **FAHRANTRIEB FÜR EINEN EINSCHUB-LEISTUNGSSCHALTER**
TRAVELLING MECHANISM FOR A WITHDRAWABLE CIRCUIT-BREAKER
SYSTEME D'ENTRAINEMENT POUR COMMUTATEUR DE PUISSANCE ENFICHABLE

(30) Priorität: 23.04.2001 DE 10120784
(43) Veröffentlichungstag der Anmeldung: 21.01.2004
(73) Patentinhaber: Siemens Aktiengesellschaft, 80333 München (DE)
(72) Erfinder: DEYLITZ, Erhard, 13125 Berlin (DE)
(86) Internationale Anmeldenummer: PCT/DE2002/001155
(87) Internationale Veröffentlichungsnummer: WO 2002/087039

(56) Entgegenhaltungen:
- DE-C- 4 420 584
- US-A- 4 139 748

## Beschreibung

Die Erfindung betrifft einen Fahrantrieb für einen Einschub-Leistungsschalter mit einer durch eine Handkurbel zu betätigenden Antriebswelle und einem Getriebe zur Umwandlung einer Drehung der Antriebswelle in eine Drehung einer rechtwinklig zu dieser angeordneten Fahrwelle, ferner mit einer Anzeigevorrichtung für die Stellung des Leistungsschalters relativ zu Haupt- und Hilfstrennkontakten.

Ein Fahrantrieb dieser Art ist z. B. durch die DE 44 20 584 C1 bekannt geworden. Die Antriebswelle ist dabei mit einem profilierten Kopfstück versehen, auf das die Handkurbel aufsetzbar ist, um den Leistungsschalter in einen zugehörigen Einschubrahmen hinein oder heraus zu fahren. Die betriebliche Notwendigkeit zu dieser Handlung kann überraschend auftreten. Daher ist es erforderlich, die Handkurbel derart bereit zu halten, dass sie bei Bedarf ohne Zeitverlust zur Verfügung steht. Die Erfahrung im Betrieb elektrischer Anlagen hat jedoch ergeben, dass gelegentlich dennoch eine benötigte Handkurbel nicht auffindbar ist oder nicht zur Verfügung steht. Dies kann beispielsweise in einer größeren Schaltanlage dadurch bedingt sein, dass nicht für alle vorhandenen Leistungsschalter Handkurbeln beschafft wurden oder einige derselben abhanden gekommen sind und die verbliebenen für gleichzeitig erforderliche Wartungsarbeiten im Einsatz sind.

Der Erfindung liegt hiervon ausgehend die Aufgabe zu Grunde, die Bedienbarkeit des Fahrantriebes eines Leistungsschalters jederzeit sicher zu stellen.

Gemäß der Erfindung wird diese Aufgabe dadurch gelöst, dass die Handkurbel einen hohlen, die Antriebswelle umgreifenden und relativ zur Antriebswelle verschiebbaren sowie gegen Abnahme von der Antriebswelle gesicherten Schaft besitzt und dass ein Griffstück der Handkurbel an einem mit dem Schaft verbundenen Kurbelarm etwa parallel zu dem Schaft verschiebbar geführt ist.

Durch diese Anordnung wird die Handkurbel zu einem integralen Bestandteil des Fahrantriebes und ist damit unverlierbar. Dabei erweist es sich, dass der Nutzen der unbedingten Verfügbarkeit der Handkurbel gegenüber der möglichen Ersparnis durch eine verringerte Anzahl von Handkurbeln weit überwiegt.

Es ist bereits bekannt (US 4 139 748), einen Leistungsschalter mit einem herausziehbaren Handgriff zum Ein- und Ausfahren zu versehen. Dieser Handgriff wirkt durch eine wiederholte Vorwärts- und Rückwärtsbewegung mittels eines Ratschengetriebes auf eine Antriebswelle, die somit nicht kontinuierlich, sondern schrittweise drehbar ist. Bei Nichtgebrauch wird der Handgriff dicht vor die Bedienungsfront des Leistungsschalter geschoben, um die Tür der Schaltzelle schließen zu können. Der Handgriff besitzt bei dieser Anordnung kein Griffstück und ermöglicht daher keine kontinuierlichen Drehung der Antriebswelle entsprechend der Anordnung nach der DE 44 20 580 C1, von der die Erfindung ausgeht.

Für den Benutzer des Fahrantriebes ist es wichtig, dass er die Handkurbel ohne die Gefahr einer Berührung mit anderen Teilen des Leistungsschalters oder der den Leistungsschalter aufnehmenden Schaltzelle benutzen kann. Dies kann dadurch erreicht werden, dass der Schaft der Handkurbel einen radial abstehenden Führungszapfen zum Eingreifen in eine Führungsnut eines die Antriebswelle und das Getriebe aufnehmenden Gehäuses besitzt und dass die Länge der Führungsnut entsprechend einer Verschiebung des Schaftes aus einer eingeschobenen Ruhestellung in eine ausgezogene Arbeitsstellung bemessen ist, in welcher sich an die Führungsnut eine Ringnut anschließt, die eine freie Drehung der Handkurbel gestattet. Damit ist sichergestellt, dass die Handkurbel erst gedreht werden kann, wenn der Schaft aus seiner Ruhestellung ganz herausgezogen ist und die Arbeitsstellung erreicht hat.

Zur Aufnahme des Kurbelarmes in seiner Ruhestellung kann eine Aufnahmetasche vorgesehen sein, die eine Durchtrittsöffnung für das im Kurbelarm verschiebbare Griffstück besitzt, wobei der Schaft, der Kurbelarm und das Griffstück in der Aufnahmetasche vollständig versenkbar sind. Damit wird vermieden, dass die Handkurbel in ihrer Ruhestellung über das Umgrenzungsprofil des Leistungsschalters vorsteht. Durch die Aufnahmetasche kann somit die Handkurbel in die Bedienungsfront bzw. das Bedienpult des I,eistungsschalters integriert werden, was für den Benutzer vorteilhaft ist.

Um eine ordnungsgemäße Benutzung des Fahrantriebes zu erleichtern, empfiehlt es sich, dass in dem Gehäuse ein Rastschieber quer zu dem Schaft verschiebbar geführt und durch eine Vorspannfeder gegen den Schaft vorgespannt ist und dass der Schaft eine mit dem Rastschieber zusammenwirkende Rastfläche zur Sicherung der in seine Arbeitsstellung herausgezogenen Stellung des Schaftes aufweist. Zur Rückführung der Handkurbel in ihre Ruhestellung kann in diesem Zusammenhang vorgesehen sein, dass der Rastschieber mit einer Betätigungsnase für eine von Hand vorzunehmende Rückstellung des Rastschiebers gegen die Kraft der Vorspannfeder versehen ist und dass die Betätigungsnase durch den Kurbelarm beim Einschieben in die Ruhestellung verdeckbar angeordnet ist. Wie noch erläutert wird, kann die Bewegung des Rastschiebers für wenigstens eine weitere wichtige Funktion herangezogen werden.

Zur Aufnahme des Kurbelarmes in seiner Ruhestellung kann eine Aufnahmetasche vorgesehen sein, die eine Durchtrittsöffnung für das im Kurbelarm verschiebbare Griffstück besitzt, wobei der Schaft, der Kurbelarm und das Griffstück in der Aufnahmetasche vollständig versenkbar sind. Eine solche Aufnahmetasche stellt sicher, dass der Kurbelarm über die Bedienfront oder das Bedienpult des Leistungsschalters nicht vorsteht und darüber hinaus der Versuch einer fehlerhaften Benutzung verhindert werden kann.

Obwohl die Aufnahmetasche so gestaltet sein könnte, dass zumindest örtlich die Möglichkeit besteht, den Kurbelarm zu hintergreifen, um ihn in seine Arbeitsstellung zu bringen, empfiehlt es sich, eine der Kontur des Kurbelarmes mit zugehörigem Schaft angepasste Gestalt der Aufnahmetasche zu wählen. Die erwünschte Bedienbarkeit des Kurbelarmes kann dennoch dadurch ermöglicht werden, dass die Tiefe der Aufnahmetasche gegenüber einem zur vollständigen Aufnahme des Kurbelarmes der Handkurbel erforderlichen Maß vergrößert ist und dass der Schaft mit dem anhängenden Kurbelarm über eine mit der Front der Aufnahmetasche bündigen Stellung hinaus gegen die Kraft einer Anschlagfeder eindrückbar ist, wobei das Griffstück in der bündigen Stellung an einem Anschlag anliegt und beim Eindrücken des Schaftes gegen die Kraft der Anschlagfeder um den vom Schaft zurückgelegten Weg aus dem Kurbelarm herausdrückbar ist. Auf diese Weise wird das Griffstück um ein solches Maß aus dem Kurbelarm herausgedrückt, dass es anschließend ganz herausgezogen werden kann, wobei zum Schluss der Kurbelarm und der anhängende Schaft gleichfalls mitgenommen werden.

Zweckmäßig kann die auf den Schaft mit anhängendem Kurbelarm wirkende Anschlagfeder als eine Schraubendruckfeder ausgebildet sein, die am Umfang der Antriebswelle zwischen einer Stirnfläche des Schaftes und einem auf der Antriebswelle sitzenden Stützring angeordnet ist. Durch die zentrale Anordnung der Feder wird jeder Gefahr einer Verkantung und damit einer unbefriedigenden Funktion vorgebeugt.

Es gehört zu den bekannten Sicherheitsmaßnahmen, dass ein Leistungsschalter nicht verfahren werden darf, wenn seine Schaltkontakte geschlossen sind (Schaltstellung "EIN"). Hierzu geeignete Anordnungen sind in Verbindung mit Fahrantrieben bekannt, die eine auf die Antriebswelle aufsteckbare Handkurbel besitzen. Hierbei sorgt eine geeignete Verschlusseinrichtung dafür, dass eine dem Kopfstück der Antriebswelle vorgelagerte Einstecköffnung in Abhängigkeit von der Schaltstellung verschlossen ist. Die gleiche Schutzwirkung kann bei einem Fahrantrieb nach der Erfindung dadurch erzielt werden, dass im Schaft der Handkurbel eine Sperrnut angeordnet und in dem Gehäuse ein Sperrhebel mit einer zum Eingreifen in die Sperrnut dienenden Sperrnase angeordnet ist, wobei die Stellung des Sperrhebels durch die Schaltstellung des Leistungsschalters gesteuert ist, derart, dass in der Schaltstellung "EIN" die Sperrnase in die Sperrnut eintaucht.

Die eingangs erwähnte Anzeigevorrichtung wird vorgesehen, damit der Benutzer des Fahrantriebes die Stellung des Leistungsschalters erkennen kann und nicht auf eine visuelle Abschätzung der jeweiligen Position des Leistungsschalters angewiesen ist. Hierzu empfiehlt es sich, dass die Anzeigevorrichtung ein anschließend an das den Schaft aufnehmende Ende der Aufnahmetasche angeordnetes Anzeigefenster für ein Anzeigemittel besitzt. Der Benutzer kann dann die Handkurbel und das Anzeigefenster ohne Wechsel der Blickrichtung beobachten.

Obwohl das die Position des Leistungsschalters tatsächlich bestimmende Bauteil die Fahrwelle ist und sich diese nicht in direkter Nähe der Handkurbel befindet, kann eine zuverlässige Anzeige auf überraschend einfache Weise dadurch erzielt werden, dass die Anzeigevorrichtung einen am Gehäuse des Fahrantriebes schwenkbar gelagerten zweiarmigen Anzeigehebel aufweist, dessen einer Hebelarm mit einer mit der Fahrwelle gekoppelten Steuerkurve zusammenwirkt und dessen anderer Hebelarm ein im Anzeigefenster wahrnehmbares Anzeigemittel trägt. Die zweiarmige Ausbildung des Anzeigehebels trägt in Verbindung mit der Steuerkurve dazu bei, eine annähernd sprungartige Anzeige zu bewirken, wie später anhand des Ausführungsbeispieles noch erläutert wird. Hierfür erweist es sich als zweckmäßig, die Steuerkurve an der Stirnfläche eines auf der Fahrwelle sitzenden Getriebrades anzuordnen.

Es gehört gleichfalls zu den bekannten Sicherheitsmaßnahmen, dass die Benutzung des Fahrantriebes durch eine Abschließvorrichtung verhindert werden kann, beispielsweise, um Wartungspersonal zu schützen. Bei bekannten Fahrantrieben, etwa nach der DE 44 20 581 C1, kann hierzu ein Verschlussorgan der Zugangsöffnung zur Antriebswelle durch ein Vorhängeschloss gesichert werden. Im Rahmen der Erfindung kann das gleiche Ergebnis dadurch erzielt werden, dass der Kurbelarm eine Durchtrittsöffnung für ein Riegelstück zur Sperrung der Handkurbel im eingeschobenen Zustand besitzt. Vorteilhaft ist hierbei die wesentlich größere Dimension des Kurbelarmes gegenüber dem genannten Verschlussorgan, was die Benutzung größerer Schlösser und bei Bedarf auch die Benutzung von mehr als einem Schloss erlaubt. Damit können mehrere Personen ihre Arbeitsstelle sichern, wenn sie an verschiedenen Stellen einer größeren technischen Anlage Wartungsarbeiten durchführen.

Wie bereits erwähnt, kann der Rastschieber wenigstens eine zusätzliche Funktion erhalten. Hierzu kann am Rastschieber eine sich in Richtung auf den Anzeigehebel erstreckende Zunge angeordnet sein, wobei der Anzeigehebel mit einer Fensteröffnung zum Eintreten der Zunge des Rastschiebers in der Teststellung des Leistungsschalters versehen ist. Hierdurch wird erreicht, dass die Handkurbel nur genau beim Erreichen der Teststellung in ihre Ruhestellung zurückgeschoben werden kann. Ist die Teststellung nicht genau erreicht, so stößt die Zunge des Rastschiebers gegen den Anzeigehebel, so dass der Rastschieber nicht verschoben werden kann, um den Schaft der Handkurbel freizugeben.

Die Erfindung wird im folgenden anhand des in den Figuren dargestellten Ausführungsbeispieles näher erläutert.

Die Figur 1 zeigt einen Fahrantrieb als Baugruppe, die an einem Niederspannungs-Leistungsschalter anzubringen ist.

Die Figur 2 zeigt wesentliche Teile des Fahrantriebes gemäß der Figur 1, jedoch ohne ein Gehäuse und ohne eine Aufnahmetasche für eine Handkurbel, wobei sich eine Fahrwelle in der Trennstellung des zugehörigen Leistungsschalters befindet.

Die Figur 3 zeigt eine der Figur 2 entsprechende Darstellung wesentlicher Teile des Fahrantriebes, jedoch in der Teststellung des zugehörigen Leistungsschalters.

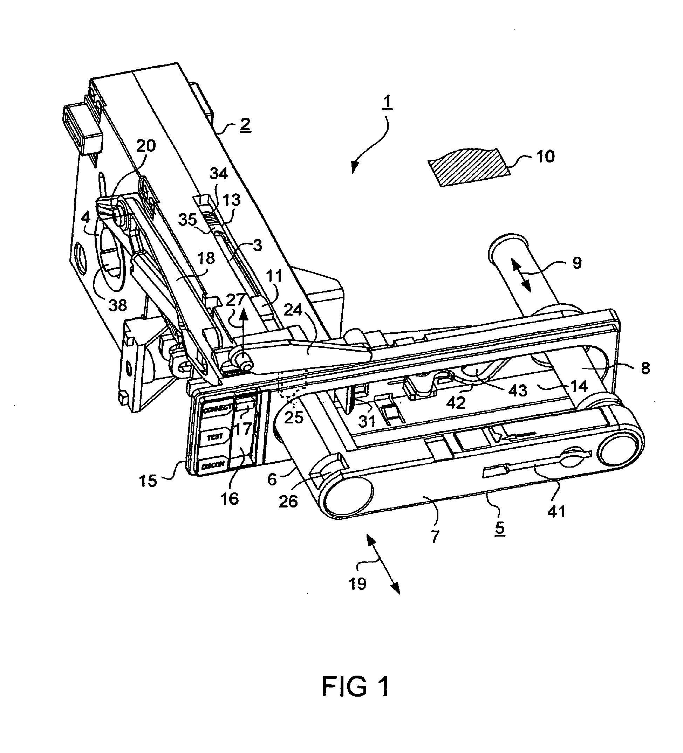

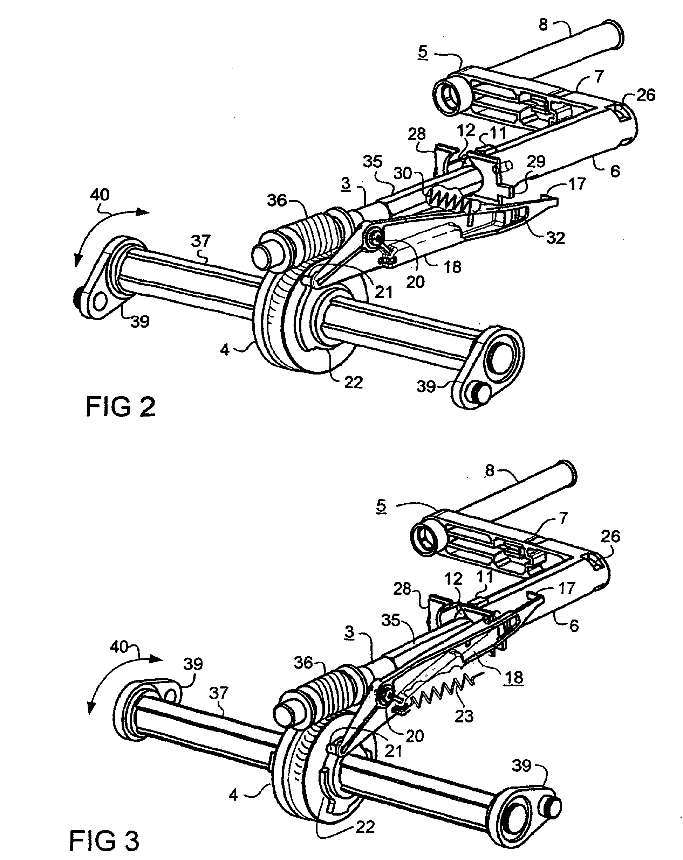

Der Fahrantrieb 1 gemäß der Figur 1 weist ein Gehäuse 2 auf, das zweckmäßig aus zwei schalenartigen Hälften zusammengesetzt sein kann, zwischen denen Getriebeteile und weitere Komponenten angeordnet sind. Eine mittels einer Handkurbel 5 ausgeübte Drehbewegung wird mittels einer Antriebswelle 3 (vgl. auch die Figuren 2 und 3) in eine Drehung einer Fahrwelle 37 (Figuren 2 und 3) umgesetzt. Hierzu ist auf der Antriebswelle 3 eine Schnecke 36 angeordnet, die mit einem Getrieberad 4 in Eingriff steht. Die Längsachsen der Antriebswelle 3 und der Fahrwelle 37 stehen rechtwinklig zueinander. Die Fahrwelle 37 ist nicht fest mit dem Fahrantrieb 1 verbunden, sondern ist in einer Profilöffnung 38 des Getrieberades 4 verschiebbar, die dem Profil der Fahrwelle 37 angepasst ist. Auf diese Weise ist der Fahrantrieb 1 für Leistungsschalter unterschiedlicher Größe verwendbar und ist nicht an eine bestimmte Position entlang der Fahrwelle 37 gebunden. An den Enden der Fahrwelle 37 sind in bekannter Weise Fahrkurbeln 39 angebracht, die etwa in der Weise mit ortsfesten Teilen zusammenwirken, wie dies schematisch in der DE 44 20 58 C1 oder der DE 44 20 581 Cl1 (jeweils Figur 1) gezeigt ist. Gleichfalls nicht dargestellt ist die Befestigung des Fahrantriebes 1 an einem Leistungsschalter, da dies dem Fachmann vertraut ist.

Zum Drehen der in dem Gehäuse 2 gelagerten Antriebswelle 3 dient, wie schon erwähnt, eine Handkurbel 5, die im Unterschied zu anderen bekannten Fahrantrieben (vgl. die genannten DE 44 20 580 C1 und DE 44 20 581 C1) nicht abnehmbar ist, sondern Bestandteil des Fahrantriebes 1 ist. Die Handkurbel 5 weist einen hohlen Schaft 6 auf, der einen Sechskantschaft 35 der Antriebswelle 3 (Figuren 2 und 3) umgreift und entlang der Richtung eines Pfeiles 19 (Figur 1) auf der Antriebswelle 1 verschiebbar ist. Offensichtlich können die Antriebswelle 3 und der Schaft 6 auch andere Profile aufweisen, um eine drehschlüssige Kopplung herzustellen, die eine Längsverschiebung ermöglicht.

Der Schaft 6 trägt einen Führungszapfen 11, der in eine am Gehäuse 2 vorgesehene Führungsnut 13 eingreift. Da die Führungsnut 13 dem Führungszapfen 11 angepasst ist, kann der Schaft 6 entlang der Führungsnut 13 verschoben werden, jedoch ohne Möglichkeit der Drehung. Diese wird erst dann freigegeben, wenn der Schaft 6 ganz nach vorn 2 herausgezogen ist, wo in dem Gehäuse 2 die Führungsnut 13 in eine Ringnut mündet. Unter "Ringnut" sind in diesem Zusammenhang auch anders geformte Ausnehmungen des Gehäuses 2 zu verstehen, die eine freie Drehung des Schaftes 6 ermöglichen.

Die Handkurbel 5 umfasst neben dem Schaft 6 einen mit dem Schaft 6 verbundenen (oder einstückig mit diesem hergestellten) Kurbelarm 7, an dessen Ende sich eine Öffnung zur Aufnahme eines Griffstückes 8 befindet. Das Griffstück 8 ist in der genannten Öffnung in der Richtung eines Pfeiles 9 parallel zu dem Schaft 6 verschiebbar und kann aus der eingeschobenen Ruhestellung gemäß der Figur 1 vom Benutzer in eine herausgezogene Arbeitsstellung überführt werden, die in den die Figuren 2 und 3 gezeigt ist.

In der Normal- oder Ruhestellung ist die Handkurbel 5 in einer Aufnahmetasche 14 bündig versenkt unterzubringen. Die Aufnahmetasche 14 gehört zu einem Bedienpulteinsatz 15 (Figur 1), der vorzugsweise am unteren Rand eines Bedienpultes eines Leistungsschalters angeordnet sein kann, wie dies in ähnlicher Weise schematisch in den erwähnten DE 44 20 580 C1 oder DE 44 20 581 C1 gezeigt ist. Beim Einschieben der Handkurbel 5 in ihre Ruhestellung gelangt eine Stirnfläche 12 am Ende des Schaftes 6 zur Anlage an einem Stützring 34, der durch eine Anschlagfeder 33 belastet ist. Die Anschlagfeder 33 ist eine Schraubendruckfeder, die auf der Antriebswelle 3 sitzt. Anschließend schiebt der Benutzer das Griffstück 8 durch die im Kurbelarm 7 befindliche Öffnung bis zur Bündigstellung mit dem Kurbelarm 7. Das innere Ende des Griffstückes 8 liegt dann an einem Anschlag 10 an.

In dieser eingeschobenen Ruhestellung hat der Benutzer an sich keine Möglichkeit, den Kurbelarm zu ergreifen, weil die Kontur der Aufnahmetasche 14 dem Kurbelarm 7 mit Schaft 6 und Griffstück 8 angepasst ist. Dennoch ist bei Bedarf ein rascher Zugriff gewährleistet. Dies geschieht dadurch, dass die Tiefe der Aufnahmetasche um ein gewisses Maß größer bemessen ist, als es die Unterbringung der genannten Teile erfordert. Der Benutzer kann deshalb den Kurbelarm 7 gegen die Kraft der Anschlagfeder 33 etwas in die Aufnahmetasche hineindrücken. An dieser Bewegung kann jedoch das Griffstück 8 wegen der Anlage an dem festen Anschlag 10 nicht teilnehmen und steht nun um den gleichen Betrag aus dem Kurbelarm 7 hervor. Der Benutzer kann nun das Griffstück 8 und anschließend den Kurbelarm 7 mit Schaft 6 herausziehen.

In ähnlicher Weise wie bei bekannten Fahrantrieben ist neben der Handkurbel 5 ein Anzeigefenster 16 angeordnet, in dem ein Anzeigemittel 17 für die betriebliche Position des Leistungsschalters in seinem Einschubrahmen sichtbar ist. Diese Positionen - Betriebstellung, Teststellung und Trennstellung - beziehen sich bekanntlich auf die relative Stellung von beweglichen Haupttrennkontakten und Hilfstrennkontakten und damit bei gegebener Anordnung dieser Trennkontakte auf die Position des Leistungsschalter im zugehörigen Einschubrahmen. Aufgrund des Eingreifens der Fahrkurbeln 39 an den Enden der Fahrwelle 37 in eine ortsfeste Führung bildet somit die Winkelstellung des Getrieberades 4 ein zuverlässiges Merkmal für die genannten Stellungen.

Für die Zwecke der Anzeigevorrichtung ist an einer Stirnseite des Getrieberades 4 eine Steuerkurve 22 angeordnet, an der ein Taststift 21 eines zweiarmigen Anzeigehebels 18 unter der Wirkung einer Zugfeder 23 (Figur 3) anliegt. Der um eine Lagerschraube 20 schwenkbare Anzeigehebel 18 überträgt somit die Steuerkurve 22 in eine vom Benutzer im Anzeigefenster 16 wahrnehmbare Stellung des Anzeigemittels 17. Hierbei ist es wesentlich, dass der Benutzer bei der Betätigung der Handkurbel 5 das Erreichen der genannten Stellungen gut erkennen kann. Zu diesem Zweck ist die Steuerkurve 22 mit Abschnitten unterschiedlicher Steigung versehen, die so gestaltet sind, dass das Anzeigemittel jeweils kurz nach dem Verlassen einer der genannten Stellungen eine Zwischenstellung einnimmt und dann erst kurz vor dem Erreichen der folgenden Stellung auf diese zeigt. Durch die relativ nahe bei der Steuerkurve 22 gelegene Lagerschraube 20 des Anzeigehebels 18 werden relativ kleine Auslenkungen in gut sichtbare Bewegungen des Anzeigemittels 17 im Anzeigefenster 16 übersetzt.

Durch einen Rastschieber 28, der durch eine Vorspannfeder 30 belastet ist (Figur 2), wird der Schaft 6 gegen ein unbeabsichtigtes Einschieben in das Gehäuse 2 geschützt. Der Rastschieber 28 ist im vorderen Teil des Gehäuses 2 geführt und wirkt gleichfalls mit der Stirnfläche 12 am inneren Ende des Schaftes 6 zusammen. Beim Herausziehen des Schaftes 6 in seine Arbeitsstellung springt der Rastschieber 28 mit einer seiner beiden der Antriebswelle 3 zugewandten Kanten hinter die Stirnfläche 12 und sperrt damit das Einschieben des Schaftes 6. Um den Schaft 6 zum Einschieben freizugeben, steht dem Benutzer eine Betätigungsnase 31 zur Verfügung, die so angeordnet ist, dass sie in die Aufnahmetasche 14 hineinragt und daher nur bei herausgezogener Handkurbel 5 zugänglich ist.

Eine zusätzliche Funktion hat der Rastschieber 28 in der mittleren Position (Teststellung) des Fahrantriebes 1. Diese äußert sich für den Benutzer im Unterschied zu der Betriebsstellung und Trennstellung nicht durch einen fühlbaren Widerstand an der Handkurbel durch das Erreichen von Endanschlägen. Damit der Benutzer dennoch die Handkurbel 5 nur beim genauen Erreichen der Teststellung einschieben kann, ist der Rastschieber 28 mit einer Zunge 29 versehen, die seitlich am Gehäuse 2 heraustritt, wenn die Betätigungsnase 31 bedient wird und eine im Anzeigehebel 18 angeordnete Fensteröffnung der Zunge 29 gegenübersteht.

Die bekannten Fahrantriebe besitzen bereits eine Einrichtung, die eine Betätigung verhindert, wenn der Leistungsschalter eingeschaltet ist (DE 44 20 580 C1). Hierzu wird der Zugang zu der Antriebswelle durch ein Schutzorgan versperrt. Bei dem Fahrantrieb nach der Erfindung wird darüber hinaus dem Benutzer auch der Zugang zur Handkurbel 5 verwehrt. Dies geschieht durch einen Sperrhebel 24 in Verbindung mit einer im Schaft 6 der Handkurbel angeordneten Sperrnut 26. Der Sperrhebel steht dabei sinngemäß mit einer Sperrstange in Verbindung, wie dies in der DE 44 20 580 C1 beschrieben ist. Bestehen die Voraussetzungen dafür, dass der Fahrantrieb 1 gefahrlos betätigt werden kann, so wird der Sperrhebel 24 entsprechend einem in der Figur 1 gezeigten Pfeil 27 angehoben, wobei eine Sperrnase 25 aus der Sperrnut 26 des Schaftes 6 herausgezogen wird. Umgekehrt ist die Einschaltung des Leistungsschalters erst möglich, wenn die Handkurbel 5 wieder in ihre Ruhestellung in der Aufnahmetasche 14 eingeschoben ist und somit die Sperrnase 25 am Sperrhebel 24 wieder in die Sperrnut 26 eintreten kann.

## Patentansprüche

1. Fahrantrieb (1) für einen Einschub-Leistungsschalter mit einer durch eine Handkurbel (5) zu betätigenden Antriebswelle (3) und einem Getriebe zur Umwandlung einer Drehung der Antriebswelle (3) in eine Drehung einer rechtwinklig zu dieser angeordneten Fahrwelle (37), ferner mit einer Anzeigevorrichtung für die Stellung des Leistungsschalters relativ zu Haupt- und Hilfstrennkontakten, wobei
die Handkurbel (5) einen hohlen, die Antriebswelle (3) umgreifenden und relativ zur Antriebswelle (3) verschiebbaren sowie gegen Abnahme von der Antriebswelle (3) gesicherten Schaft (6) besitzt, **dadurch gekennzeichnet, dass** ein Griffstück (8) der Handkurbel (5) an einem mit dem Schaft (6) verbundenen Kurbelarm (7) etwa parallel zu dem Schaft (6) verschiebbar geführt ist.

2. Fahrantrieb nach Anspruch 1,
**dadurch gekennzeichnet, dass** der Schaft (6) der Handkurbel (5) einen radial abstehenden Führungszapfen (11) zum Eingreifen in eine Führungsnut (13) eines die Antriebswelle (3) und das Getriebe aufnehmenden Gehäuses (2) besitzt und dass die Länge der Führungsnut (13) entsprechend einer Verschiebung des Schaftes (6) aus einer eingeschobenen Ruhestellung in eine ausgezogene Arbeitsstellung bemessen ist, in welcher sich an die Führungsnut (13) eine Ringnut anschließt, die eine freie Drehung der Handkurbel (5) gestattet.

3. Fahrantrieb nach Anspruch 2,
**dadurch gekennzeichnet, dass** in dem Gehäuse (2) ein Rastschieber (28) quer zu dem Schaft (6) verschiebbar geführt und durch eine Vorspannfeder (30) gegen den Schaft (6) vorgespannt ist und dass der Schaft (6) eine mit dem Rastschieber (28) zusammenwirkende Stirnfläche (12) zur Sicherung der in seine Arbeitsstellung herausgezogenen Stellung des Schaftes (6) aufweist.

4. Fahrantrieb nach Anspruch 3,
**dadurch gekennzeichnet, dass** der Rastschieber (28) mit einer Betätigungsnase (31) für eine von Hand vorzunehmende Rückstellung des Rastschiebers (28) gegen die Kraft der Vorspannfeder (30) versehen ist und dass die Betätigungsnase (31) durch den Kurbelarm (7) beim Einschieben in die Ruhestellung verdeckbar angeordnet ist.

5. Fahrantrieb nach einem der vorangehenden Ansprüche,
**dadurch gekennzeichnet, dass** zur Aufnahme der Kurbelarmes (7) der Handkurbel (5) in seiner Ruhestellung eine Aufnahmetasche (14) vorgesehen ist, die eine Durchtrittsöffnung für das im Kurbelarm (7) verschiebbare Griffstück (8) besitzt und dass der Schaft (6), der Kurbelarm (7) und das Griffstück (8) in der Aufnahmetasche (14) vollständig versenkbar sind.

6. Fahrantrieb nach Anspruch 4,
**dadurch gekennzeichnet, dass** die Tiefe der Aufnahmetasche (14) gegenüber einem zur vollständigen Aufnahme des Kurbelarmes (7) der Handkurbel (5) erforderlichen Maß vergrößert ist und dass der Schaft (6) mit dem anhängenden Kurbelarm (7) über eine mit der Front der Aufnahmetasche (14) bündigen Stellung hinaus gegen die Kraft einer Anschlagfeder (33) eindrückbar ist, wobei das Griffstück (8) in der bündigen Stellung an einem Anschlag (10) anliegt und beim Eindrücken des Schaftes (6) gegen die Kraft der Anschlagfeder (33) um den vom Schaft (6) zurückgelegten Weg aus dem Kurbelarm (7) herausdrückbar ist.

7. Fahrantrieb nach Anspruch 6,
**dadurch gekennzeichnet, dass** die auf den Schaft (6) mit anhängendem Kurbelarm (7) wirkende Anschlagfeder (33) als eine Schraubendruckfeder ausgebildet ist, die am Umfang der Antriebswelle (3) zwischen einer Stirnfläche (12) des Schaftes (6) und einem auf der Antriebswelle (3) sitzenden Stützring (34) angeordnet ist.

8. Fahrantrieb nach einem der vorangehenden Ansprüche,
**dadurch gekennzeichnet, dass** im Schaft (6) der Handkurbel (5) eine Sperrnut (26) angeordnet und an dem Gehäuse (2) ein Sperrhebel (24) mit einer zum Eingreifen in die Sperrnut (26) dienenden Sperrnase (25) angeordnet ist, wobei die Stellung des Sperrhebels (24) durch die Schaltstellung des Leistungsschalters gesteuert ist, derart, dass in der Schaltstellung "EIN" die Sperrnase (25) in die Sperrnut (26) eintaucht.

9. Fahrantrieb nach einem der vorangehenden Ansprüche,
**dadurch gekennzeichnet, dass** die Anzeigevorrichtung ein anschließend an das den Schaft (6) aufnehmende Ende der Aufnahmetasche (14) angeordnetes Anzeigefenster (16) für ein Anzeigemittel (17) besitzt.

10. Fahrantrieb nach Anspruch 9,
**dadurch gekennzeichnet, dass** die Anzeigevorrichtung einen am Gehäuse (2) des Fahrantriebes (1) schwenkbar gelagerten zweiarmigen Anzeigehebel (18) aufweist, dessen einer Hebelarm mit einer mit der Fahrwelle (37) gekoppelten Steuerkurve (22) zusammenwirkt und dessen anderer Hebelarm das im Anzeigefenster (16) wahrnehmbare Anzeigemittel (17) trägt.

11. Fahrantrieb nach Anspruch 10,
**dadurch gekennzeichnet, dass** die Steuerkurve (22) an einer Stirnfläche eines auf der Fahrwelle (37) sitzenden Getrieberades (4) angeordnet ist.

12. Fahrantrieb nach einem der vorangehenden Ansprüche,
**dadurch gekennzeichnet, dass** der Kurbelarm (7) eine Durchtrittsöffnung (41) für ein Riegelstück (42) zur Sperrung der Handkurbel (5) im eingeschobenen Zustand besitzt.

13. Fahrantrieb nach Anspruch 10 oder einem der folgenden,
**dadurch gekennzeichnet, dass** der Rastschieber (28) eine sich in Richtung auf den Anzeigehebel (18) erstreckende Zunge (29) besitzt und dass der Anzeigehebel (18) mit einer Fensteröffnung (32) zum Eintreten der Zunge (29) des Rastschiebers (28) in der Teststellung des Leistungsschalters versehen ist.

## Claims

1. Travelling mechanism (1) for a withdrawable circuit-breaker with a drive shaft (3), to be actuated by a crank handle (5), and a gear mechanism for transforming a rotation of the drive shaft (3) into a rotation of a travelling shaft (37) arranged at right angles to the latter, also with an indicating device for the position of the circuit-breaker in relation to main and auxiliary isolating contacts, the crank handle (5) having a hollow shaft (6), which reaches around the drive shaft (3) and is displaceable in relation to the drive shaft (3) and is also secured in a manner that prevents it from being removed from the drive shaft (3), **characterized in that** a grip (8) of the crank handle (5) is guided displaceably approximately parallel to the shaft (6) on a crank arm (7) connected to the shaft (6).

2. Travelling mechanism according to Claim 1, **characterized in that** the shaft (6) of the crank handle (5) has a radially protruding guiding pin (11) for engaging in a guiding slot (13) of a housing (2) accommodating the drive shaft (3) and the gear mechanism and **in that** the length of the guiding slot (13) is dimensioned to correspond to a displacement of the shaft (6) from a pushed-in inoperative position into a pulled-out working position, in which the guiding slot (13) is adjoined by an annular slot which allows free rotation of the crank handle (5).

3. Travelling mechanism according to Claim 2, **characterized in that** a locking slide (28) is guided in the housing (2) in a manner that permits it to be displaced transversely in relation to the shaft (6) and is biased against the shaft (6) by a biasing spring (30) and **in that** the shaft (6) has a locking face (12) interacting with the locking slide (28) for securing the position of the shaft (6) pulled out into its working position.

4. Travelling mechanism according to Claim 3, **characterized in that** the locking slide (28) is provided with an actuating lug (31) for a return movement of the locking slide (28) to be performed manually against the force of the biasing spring (30) and **in that** the actuating lug (31) is arranged such that it can be covered by the crank arm (7) during pushing into the inoperative position.

5. Travelling mechanism according to one of the preceding claims, **characterized in that**, for accommodating the crank arm (7) of the crank handle (5) in its inoperative position, there is provided an accommodating recess (14), which has a through-opening for the grip (8) which is displaceable in the crank arm (7), and **in that** the shaft (6), the crank arm (7) and the grip (8) are able to be lowered completely in the accommodating recess (14).

6. Travelling mechanism according to claim 4, **characterized in that** the depth of the accommodating recess (14) is increased with respect to an amount required for completely accommodating the crank arm (7) of the crank handle (5) and **in that** the shaft (6) with the attached crank arm (7) can be pressed in against the force of a stop spring (33) beyond a position flush with the front of the accommodating recess (14), the grip (8) bearing in the flush position against a stop (10) and, when the shaft (6) is pressed in against the force of the stop spring (33), being able to be pressed out of the crank arm (7) by the distance covered by the shaft (6).

7. Travelling mechanism according to Claim 6, **characterized in that** the stop spring (33) acting on the shaft (6) with the attached crank arm (7) is formed as a helical compression spring, which is arranged on the circumference of the drive shaft (3) between an end face (12) of the shaft (6) and a supporting ring (34) seated on the drive shaft (3).

8. Travelling mechanism according to one of the preceding claims, **characterized in that** a blocking slot (26) is arranged in the shaft (6) of the crank handle (5) and a blocking lever (24) with a blocking lug (25) serving for engagement in the blocking slot (26) is arranged on the housing (2), the position of the blocking lever (24) being controlled by the switching position of the circuit-breaker in such a way that, in the "ON" switching position, the blocking lug (25) enters the blocking slot (26).

9. Travelling mechanism according to one of the preceding claims, **characterized in that** the indicating device has an indicating window (16) for an indicating means (17), arranged adjoining the end of the accommodating recess (14) that accommodates the shaft (6).

10. Travelling mechanism according to Claim 9, **characterized in that** the indicating device has a two-armed indicating lever (18) which is pivotably mounted on the housing (2) of the travelling mechanism (1) and the one lever arm of which interacts with a control cam (22) coupled to the travelling shaft (37) and the other lever arm of which bears the indicating means (17) which can be perceived in the indicating window (16).

11. Travelling mechanism according to Claim 10, **characterized in that** the control cam (22) is arranged on an end face of a gear wheel (4) seated on the travelling shaft (37).

12. Travelling mechanism according to one of the preceding claims, **characterized in that** the crank arm (7) has a through-opening (41) for a bolt piece (42) for blocking the crank handle (5) in the pushed-in state.

13. Travelling mechanism according to Claim 10 or one of the following claims, **characterized in that** the locking slide (28) has a tongue (29) extending in the direction of the indicating lever (18) and **in that** the indicating lever (18) is provided with a window opening (32) for the tongue (29) of the locking slide (28) to enter in the test position of the circuit-breaker.

## Revendications

1. Entraînement ( 1 ) en translation pour un disjoncteur à tiroir, comprenant un arbre ( 3 ) d'entraînement à actionner par une manivelle ( 5 ) et une transmission de transformation d'une rotation de l'arbre ( 3 ) d'entraînement en une rotation d'un arbre ( 37 ) de déplacement monté à angle droit par rapport à celui-ci, comprenant, en outre, un dispositif d'indication de la position du disjoncteur par rapport à des contacts de séparation principaux et auxiliaires, dans lequel la manivelle ( 5 ) possède un fût ( 6 ) tubulaire entourant l'arbre ( 3 ) d'entraînement et pouvant coulisser par rapport à l'arbre ( 3 ) d'entraînement, ainsi que sécurisé vis-à-vis d'un retrait de l'arbre ( 3 ) d'entraînement,
**caractérisé en ce que**
un manche ( 8 ) de la manivelle ( 5 ) est monté coulissant à peu près parallèlement au fût ( 6 ) sur un bras ( 7 ) de manivelle relié au fût ( 6 ).

2. Entraînement en translation suivant la revendication 1,
**caractérisé en ce que**
le fût ( 6 ) de la manivelle ( 5 ) possède un tenon ( 11 ) de guidage en saillie radialement de pénétration dans une rainure ( 13 ) de guidage d'un carter ( 2 ) recevant l'arbre ( 3 ) d'entraînement et la transmission et **en ce que** la longueur de la rainure ( 13 ) de guidage est telle qu'elle correspond à un déplacement du fût ( 6 ) d'une position de repos rentrée à une position de travail déployée, dans laquelle il se raccorde à la rainure ( 3 ) de guidage une rainure annulaire, qui autorise une rotation libre de la manivelle ( 5 ).

3. Entraînement en translation suivant la revendication 2,
**caractérisé en ce que**
dans le carter ( 2 ), un coulisseau ( 28 ) d'encliquetage est monté coulissant transversalement au fût ( 6 ) et est précontraint par un ressort ( 30 ) de précontrainte sur le fût ( 6 ) et **en ce que** le fût ( 6 ) a une surface ( 12 ) frontale, qui coopère avec le coulisseau ( 28 ) d'encliquetage, pour la fixation de la position du fût ( 6 ) déployé dans sa position de travail.

4. Entraînement en translation suivant la revendication 3,
**caractérisé en ce que**
le coulisseau ( 28 ) d'encliquetage est pourvu d'un bec ( 31 ) d'actionnement pour un rappel s'effectuant à la main du coulisseau ( 28 ) d'encliquetage à l'encontre de la force du ressort ( 30 ) de précontrainte et **en ce que** le bec ( 31 ) d'actionnement est monté de manière à pouvoir être recouvert par le bras ( 7 ) de manivelle, lors de l'entrée dans la position de repos.

5. Entraînement en translation suivant l'une des revendications précédentes,
**caractérisé en ce que**
il est prévu, pour la réception du bras ( 7 ) de la manivelle ( 5 ) dans sa position de repos, une poche ( 14 ) de réception, qui a une ouverture de passage du manche ( 8 ) coulissant dans le bras ( 7 ) de manivelle et **en ce que** le fût ( 6 ), le bras ( 7 ) de manivelle et le manche ( 8 ) peuvent être escamotés complètement dans la poche ( 14 ) de réception.

6. Entraînement en translation suivant la revendication 4,
**caractérisé en ce que**
la profondeur de la poche ( 14 ) de réception est agrandie par rapport à une dimension nécessaire pour recevoir complètement le bras ( 7 ) de la manivelle ( 5 ) et **en ce que** le fût ( 6 ) avec le bras ( 7 ) de manivelle suspendu peut être, à l'encontre de la force d'un ressort ( 33 ) de butée, enfoncé au-delà d'une position à affleurement avec la face de la poche ( 14 ) de réception, le manche ( 8 ) s'appliquant à une butée ( 10 ) en la position d'affleurement et, lorsque le fût ( 6 ) est enfoncé à l'encontre de la force du ressort ( 33 ) de butée, pouvant être ressorti du bras ( 7 ) de manivelle du trajet parcouru par le fût ( 6 ).

7. Entraînement en translation suivant la revendication 6,
**caractérisé en ce que**
le ressort ( 33 ) de butée agissant sur le fût ( 6 ) ayant le bras ( 7 ) de manivelle suspendu est constitué sous la forme d'un ressort hélicoïdal de compression, qui est disposé sur le pourtour de l'arbre ( 3 ) d'entraînement entre une surface ( 12 ) frontale du fût ( 6 ) et un anneau ( 34 ) d'appui placé sur l'arbre ( 3 ) d'entraînement.

8. Entraînement en translation suivant l'une des revendications précédentes,
**caractérisé en ce que**
il est prévu, dans le fût ( 6 ) de la manivelle ( 5 ), une rainure ( 26 ) d'arrêt et, sur le carter ( 2 ), un levier ( 24 ) d'arrêt ayant un bec ( 25 ) d'arrêt servant à pénétrer dans la rainure ( 26 ) d'arrêt, la position du levier ( 24 ) d'arrêt étant commandée par la position de commutation du disjoncteur, de manière à ce que, dans la position de commutation "fermée", le bec ( 25 ) d'arrêt pénètre dans la rainure ( 26 ) d'arrêt.

9. Entraînement en translation suivant l'une des revendications précédentes,
**caractérisé en ce que**
le dispositif d'affichage possède un hublot ( 16 ) d'affichage d'un moyen ( 17 ) d'affichage, hublot disposé, en se raccordant, à l'extrémité, recevant le fût ( 6 ), de la poche ( 14 ) de réception.

10. Entraînement en translation suivant la revendication 9,
**caractérisé en ce que**
le dispositif d'affichage a un levier ( 18 ) d'affichage à deux bras monté pivotant sur le carter ( 2 ) de l'entraînement en translation et dont un bras coopère avec une came ( 22 ) de commande couplée à l'arbre ( 37 ) de déplacement, tandis que l'autre bras de levier porte le moyen ( 17 ) d'affichage qui peut être perçu dans le hublot ( 16 ) d'affichage.

11. Entraînement en translation suivant la revendication 10,
**caractérisé en ce que**
la came ( 22 ) de commande est montée sur une surface frontale d'une roue ( 4 ) d'entraînement mise sur l'arbre ( 37 ) de déplacement.

12. Entraînement en translation suivant l'une des revendications précédentes,
**caractérisé en ce que**
le bras ( 7 ) de manivelle a une ouverture ( 41 ) traversante pour une pièce ( 42 ) de verrouillage en vue de bloquer la manivelle ( 3 ) dans l'état rentré.

13. Entraînement en translation suivant la revendication 10 ou l'une des suivantes,
**caractérisé en ce que**
le coulisseau ( 28 ) d'encliquetage possède une languette ( 29 ) s'étendant en direction du levier ( 18 ) d'affichage et **en ce que** le levier ( 18 ) d'affichage est pourvu d'une ouverture ( 32 ) de hublot pour l'entrée de la languette ( 29 ) du coulisseau ( 28 ) d'encliquetage dans la position de test du disjoncteur.
